# FASCICULE DE BREVET EUROPEEN

(11) **EP 2 181 371 B1**
(45) Date de publication et mention de la délivrance du brevet: **22.05.2013**
(21) Numéro de dépôt: 08827885.8
(22) Date de dépôt: 07.07.2008
(51) Int. Cl.: G05B 23/02, F02K 1/76

(54) **SYSTEME DE COMMANDE D'AU MOINS UN ACTIONNEUR DE CAPOTS D'UN INVERSEUR DE POUSSEE POUR TURBOREACTEUR ET PROCEDE DE TEST DU SYSTEME**
SYSTEM ZUR STEUERUNG MINDESTENS EINES AKTUATORS FÜR SCHUBUMKEHRER-COWLINGS AUF EINEM TURBOSTRAHLMOTOR UND VERFAHREN ZUM TESTEN EINES SOLCHEN SYSTEMS
SYSTEM FOR CONTROLLING AT LEAST ONE ACTUATOR FOR THRUST REVERSER COWLINGS ON A TURBOJET ENGINE AND METHOD FOR TESTING SAID SYSTEM

(30) Priorité: 20.08.2007 FR 0705924
(43) Date de publication de la demande: 05.05.2010
(73) Titulaire: Aircelle, 76700 Gonfreville l'Orcher (FR)
(72) Inventeur: MAALIOUNE, Hakim, 78630 Orgeval (FR)
(74) Mandataire: Maureau, Philippe
(86) Numéro de dépôt international: PCT/FR2008/000977
(87) Numéro de publication internationale: WO 2009/024688

(56) Documents cités:
- EP-A- 0 843 089
- EP-A- 1 215 118
- US-A- 4 782 292
- US-A- 5 638 383

## Description

La présente invention se rapporte à un système de commande d'au moins un actionneur de capots d'un inverseur de poussée pour turboréacteur et à un procédé de test d'un tel système.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

De manière générale, ces capots mobiles sont actionnés par des vérins hydrauliques ou pneumatiques qui nécessitent un réseau de transport d'un fluide sous pression. Ce fluide sous pression est classiquement obtenu soit par piquage d'air sur le turboréacteur dans le cas d'un système pneumatique, soit par prélèvement sur le circuit hydraulique de l'avion. De tels systèmes requièrent une maintenance importante car la moindre fuite dans le réseau hydraulique ou pneumatique peut être difficilement détectable et risque d'avoir des conséquences dommageables tant sur l'inverse que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier les divers inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans le document EP 0 843 089.

Cependant, les actionneurs électromécaniques présentent également plusieurs inconvénients qu'il est nécessaire de résoudre pour profiter pleinement des avantages qu'ils apportent en termes de gain de masse et d'encombrement.

En particulier, les actionneurs électromécaniques nécessitent l'utilisation d'un système de commande électrique est mécanique complet comprenant les actionneurs, des composants de puissance et de contrôle, ainsi que des capteurs, l'ensemble de ces composants pouvant présenter des pannes.

Il est d'usage, lors du remplacement de l'un des composants ou d'une partie d'un composant, ou encore en cas de présomption d'une panne sur un composant de procéder à des vérifications du fonctionnement de l'actionneur.

Il faut alors procéder à un ou plusieurs déploiements de l'inverseur de poussée pour permettre de vérifier le comportement du composant, en constatant si le fonctionnement de celui-ci a une influence sur le fonctionnement global du système de commande de l'actionneur d'inverseur de poussée.

Ce type de vérification occasionne une usure globale du système de commande de l'actionneur et implique de réaliser des cycles de déploiement de l'actionneur qui exigent le respect de consignes de sécurité spécifiques.

La présente invention a pour objet une simplification des vérifications du système et une limitation de l'usure globale du système due à ces vérifications.

A cet effet, la présente invention a pour objet un système de commande d'au moins un actionneur de capots d'un inverseur de poussée pour turboréacteur comprenant un ensemble de composants d'actionnement et de contrôle comportant au moins au moins un actionneur de capot entraîné par un moteur électrique, est des moyens de commande de l'actionneur et du moteur électrique, caractérisé en ce que les moyens de commande comprennent des moyens de test comportant une interface destinée à la réception de requêtes de test en provenance d'un utilisateur, et en ce que les moyens de test sont agencés pour procéder, à réception d'une requête de test, à un cycle de test d'un ou plusieurs composants du système comprenant un actionnement isolé du ou des composants par rapport aux autres composants du système.

Grâce aux dispositions selon l'invention, il n'est plus nécessaire de réaliser des cycles de déploiement complets pour vérifier chaque composant individuellement. Ces dispositions permettent de diminuer l'usure globale du dispositif due aux vérifications, car seuls le ou les composants à tester sont actionnés. De plus, le système permet une interaction avec un utilisateur pour réaliser les tests.

Ces dispositions permettent également de mettre en place des procédures de maintenance préventive en réalisant à des intervalles de nombre d'heures de vols déterminés des tests sur des composants spécifiques, éventuellement dans des conditions différentes de celle de leur utilisation normale, pour détecter une probabilité d'un disfonctionnement à venir du composant.

Avantageusement, l'interface des moyens de test est reliée par l'intetmédiaire de moyens de communication au système de commande de l'aéronef.

Ces dispositions permettent d'utiliser l'interface utilisateur du système de commande de l'aéronef pour commander les tests.

Selon un mode de réalisation, les moyens de test sont agencés pour réaliser de façon répétitive un cycle de test sur un composant du système.

Ces dispositions permettent notamment de mettre en évidence des pannes qui ne se reproduisent pas de façon systématique à chaque utilisation d'un composant. En multipliant le nombre d'occurrences de l'utilisation d'un composant lors de multiples cycles de test, la probabilité de constater la panne augmente.

Avantageusement, les moyens de test sont agencés pour que les actions commandées sur un composant lors d'un cycle de test ramènent le composant dans son état initial à la fin du cycle de test.

Ces dispositions permettent de faciliter la réalisation de cycle de test répétitifs.

Selon un mode de réalisation, les moyens de test sont agencés pour réaliser, lors d'un cycle de test, une commande sur un composant avec une valeur de puissance inférieure à celle utilisée en fonctionnement normal.

Ces dispositions permettent de limiter l'usure du composant testé, tout en réalisant fonctionnellement les mêmes opérations que dans un fonctionnement normal.

Avantageusement, les moyens de test sont agencés pour que la commande d'un composant soit réalisée par l'intermédiaire de la même partie des moyens de commande lors d'un cycle de test et lors du fonctionnement normal.

Ces dispositions permettent de réaliser un cycle de test dans des conditions représentatives du fonctionnement normal du composant.

Selon un mode de réalisation, le système comprend un verrou de capot, et un cycle de test correspond à une ouverture puis à une fermeture du verrou.

Selon un mode de réalisation, le système comprend un frein de moteur, et un cycle de test comprend une activation et une désactivation du frein de moteur.

Avantageusement, les moyens de test comprennent un jeu d'instruction de programme exécutées par les moyens de commande.

Ces dispositions permettent d'utiliser le même microcontrôleur pour les tests et pour le fonctionnement normal, ce qui permet de vérifier le fonctionnement de cet élément.

Selon un mode de réalisation, le système comprend au moins un capteur d'une grandeur représentative du fonctionnement d'un composant, et le résultat d'un cycle de test est obtenu par l'analyse du signal fourni par le capteur.

Ces dispositions permettent d'obtenir, au niveau des moyens de test, un diagnostic d'une panne éventuelle, sans avoir à ajouter des capteurs complémentaires au niveau du composant à tester.

La présente invention concerne également un procédé de test d'un système de commande d'au moins un actionneur de capots d'un inverseur de poussée pour turboréacteur tel que décrit précédemment, comprenant les étapes consistant à recevoir une requête pour réaliser le test d'un composant en provenance d'un utilisateur, et à réaliser une commande d'actionnement d'un ou de plusieurs composants du système de commande de l'inverseur de poussée de façon isolée par rapport aux autres composants du système.

Avantageusement, l'étape de commande d'une action est réalisée de façon répétitive.

Selon un mode de réalisation, la commande de l'action sur un composant testé est réalisée avec une valeur de puissance inférieure à celle utilisée en fonctionnement normal.

De toute façon, l'invention sera bien comprise à l'aide de la description qui suit, en référence au dessin schématique annexé représentant, à titre d'exemple non limitatif, une forme.d'exécution de ce système.
La figure 1 est une vue schématique partielle en perspective d'une nacelle intégrant un inverseur de poussée à grille.
La figure 2 est une représentation schématique des capots mobiles et de leur système d'actionnement.
La figure 3 est une représentation schématique du système de commande des actionneurs des capots mobiles.
La figure 4 est un organigramme d'un procédé selon l'invention.

Avant de décrire en détail un mode de réalisation de l'invention, il est important de préciser que le procédé et le système décrit ne sont pas limités à un type d'inverseur en particulier. Bien qu'illustrée par un inverseur à grilles, l'invention pourra être mise en oeuvre avec des inverseurs de conception différentes, notamment à portes.

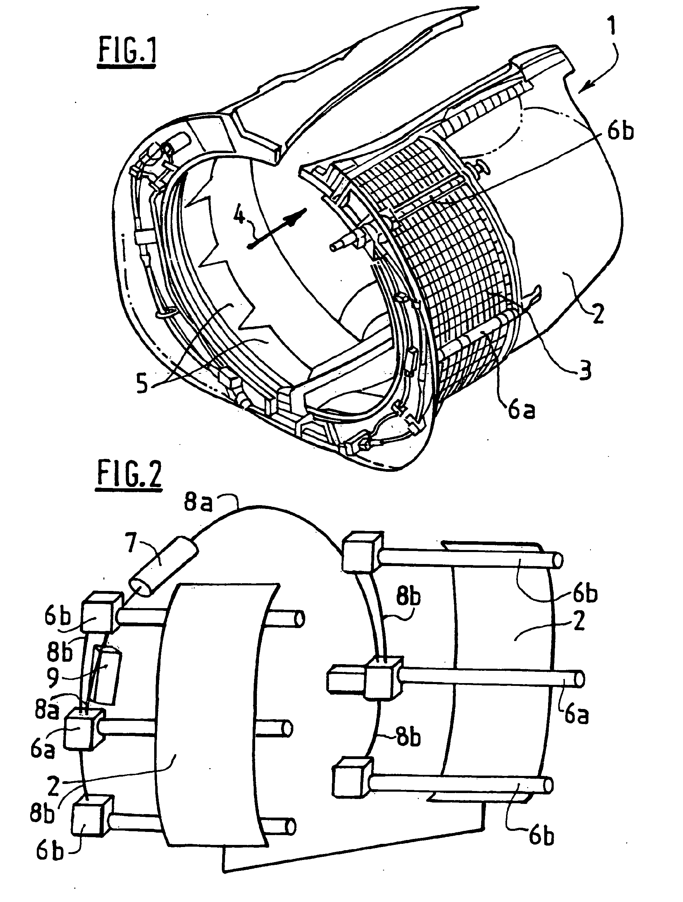

La figure 1 présente une vue schématique partielle d'une nacelle intégrant un inverseur de poussée 1. Le turboréacteur n'est pas représenté. Cet inverseur de poussée 1 possède une structure comprenant deux capots mobiles 2 semi-circulaires susceptibles de coulisser pour découvrir des grilles 3 d'aubes de déviation placées entre les capots mobiles 2 et une section de passage du flux d'air 4 à dévier. Des portes de blocage 5 sont disposées à l'intérieur de la structure de manière à pouvoir pivoter et passer d'une position dans laquelle elles ne gênent pas le passage du flux d'air 4 à une position dans laquelle elles bloquent ce passage. Afin de coordonner l'ouverture des capots mobiles 2 avec une position obturante des portes de blocage 5, celles-ci sont mécaniquement reliées au capot mobile 2 par des charnières et à la structure fixe par un système de bielles (non représentées).

Le déplacement des capots mobiles 2 le long de l'extérieur de la structure est assurée par un ensemble de vérins 6a, 6b montés sur un cadre avant à l'intérieur duquel sont logés un moteur électrique 7 et des arbres flexibles de transmission 8a, 8b respectivement connectés aux vérins 6a, 6b pour les actionner.

Le système d'actionnement des capots mobiles 2 est représenté seul à la figure 2. Chaque capot mobile 2 peut être translaté sous l'action de trois vérins 6a, 6b, comprenant un vérin central 6a et deux vérins additionnels 6b, actionnés par un unique moteur électrique 7 relié à des moyens de commande 9, comprenant un microcontrôleur. La puissance délivrée par le moteur électrique 7 est tout d'abord distribuée aux vérins centraux 6a par l'intermédiaire de deux arbres de transmission flexibles 8a, puis aux vérins additionnels 6b par des arbres de transmission flexibles 8b.

Selon une variante non représentée, seuls deux vérins haut et bas sont utilisés pour chaque capot, actionnés par un moteur électrique unique relié à une interface de commande. La puissance délivrée par le moteur électrique est distribuée aux deux vérins haut et bas par l'intermédiaire de deux arbres de transmission flexibles 8a.

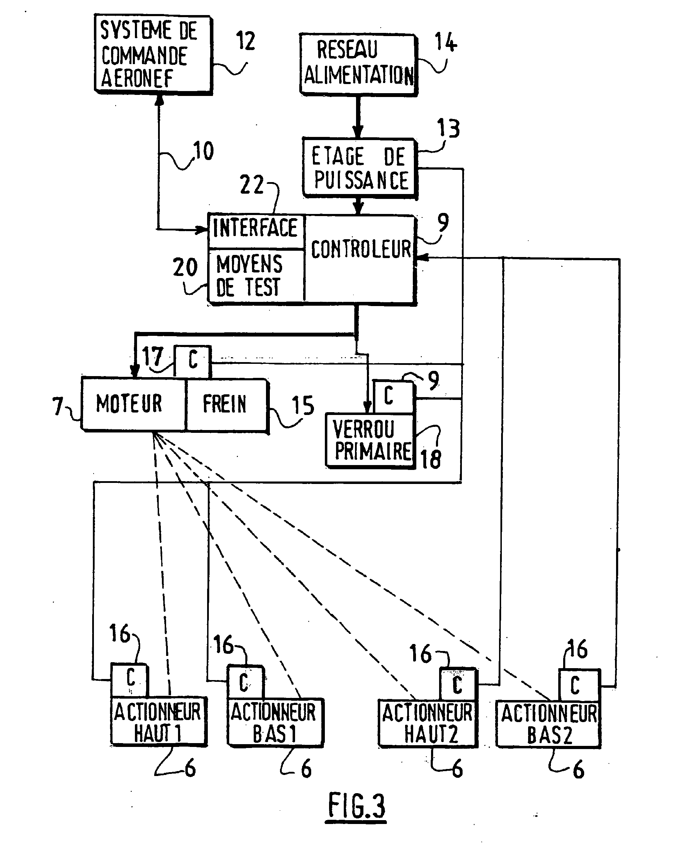

La figure 3 montre schématiquement un système de commande de l'actionnement de deux capots avec pour chaque capot deux actionneurs haut et bas.

Ainsi que représenté sur la figure 3 un système de commande des actionneurs d'un inverseur de poussée selon l'invention comprend des moyens de commande constitués par un microcontrôleur 9.

Ce microcontrôleur est relié par des moyens de communication 10 au système de commande 12 de l'aéronef.

Le système de commande comprend également un étage de puissance 13 relié au réseau d'alimentation 14 de l'aéronef.

Le microcontrôleur 9 permet la commande d'un moteur électrique 7 et des vérins ou actionneurs 6 comme décrit précédemment. Le moteur comporte également un frein 15 commandé également par le microcontrôleur 9.

Certains des actionneurs 6 sont équipés de capteurs de position 16 permettant de connaître le déplacement de l'actionneur 6 entre la position ouverte et fermée. De la même façon, le moteur et/ou le frein sont équipés de capteurs de position 17 qui permettent également de connaître le sens de déplacement des actionneurs 6 et donc des capots 2.

Le microcontrôleur 9 commande également l'ouverture et la fermeture d'un verrou du capot 18, appelé verrou primaire. Ce verrou empêche l'ouverture non désirée du capot 2. Ce verrou 18 est associé à un capteur de capteur de proximité 19 indiquant la position de la partie mobile du verrou 18.

Le microcontrôleur 9 comprend des moyens de test 20 sur au moins une partie des composants du système, une interface 22 entre les moyens de test et les moyens de communication 10, les moyens de test 20 étant agencés pour procéder à un cycle de test d'un composant sur une requête du système de commande de l'aéronef, commandé par un utilisateur.

Les moyens de test 20 sont agencés pour réaliser de façon répétitive une action/ un cycle de test sur un composant du système, selon des paramètres du cycle de test ramenant le composant dans son état initial à la fin du cycle de test, de façon à permettre de réaliser celui-ci en boucle sans endommager d'autres composants du système.

Lors d'un cycle de test, une commande sur un composant avec une valeur de puissance inférieure à celle utilisée en fonctionnement normal, la commande étant réalisée par l'intermédiaire de la même partie des moyens de commande 9.

Un premier exemple de test peut être réalisé relativement à un verrou primaire 18. Chaque cycle de test correspond à une ouverture puis à une fermeture du verrou 18. Ce verrou 18 comprend une bobine destinée à créer un champ magnétique pour entraîner une partie mobile du verrou 18. Il est possible en commandant des cycles successifs d'excitation de la bobine de vérifier l'ouverture et la fermeture du verrou 18. La vérification de l'ouverture et de la fermeture du verrou est réalisée par la vérification d'un signal provenant du capteur de proximité 19.

Ainsi, le résultat d'un cycle de test est obtenu par l'analyse du signal fourni par un capteur 19 d'une grandeur représentative du fonctionnement d'un composant.

Un second exemple de test concerne le frein 15 du moteur 7. Dans ce cas, chaque cycle de test comprend une activation et une désactivation du frein de moteur 15.

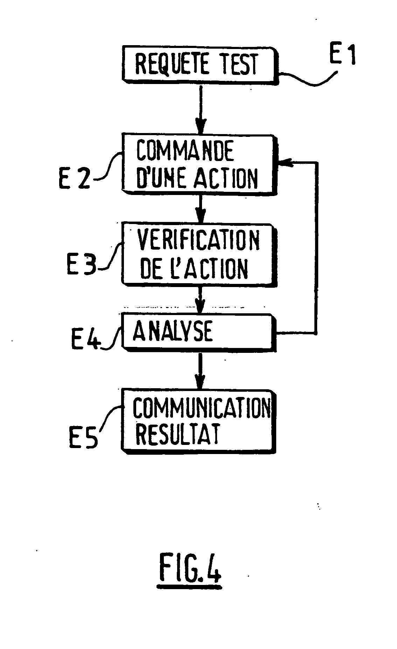

Un diagramme résumant les étapes d'un procédé de commande d'au moins un actionneur de capots d'un inverseur de poussée selon l'invention est représenté à là figure 4.

Ce procédé comporte une première étape E1 consistant à recevoir une requête pour réaliser le test d'un composant en provenance du système de commande de l'aéronef.

Dans une seconde étape E2, les moyens de test 20 réalisent une commande d'une action d'un composant du système de commande de l'inverseur de poussée ou d'une sous partie du système comprenant un ensemble de composant. De façon préférée, la commande de l'action sur un composant testé est réalisée avec une valeur de puissance inférieure à celle utilisée en fonctionnement normal.

Dans une troisième étape E3, une vérification des résultats du test est effectuée, par exemple en utilisant un capteur 19, comme décrit précédemment,

Dans une quatrième étape E4, une analyse des résultats du test est opérée par les moyens de test 20 pour identifier une éventuelle panne.

Il est à noter que les étapes E2 à E4 peuvent être réalisées de façon répétitive en vue de détecter des pannes ne se reproduisant pas de façon systématique.

Dans une cinquième étape E5, les résultats du test sont communiqués au système de commande de l'aéronef 12 par l'intermédiaire de l'interface 22 et des moyens de communication 20.

Il est à noter que le procédé de commande décrit ci-dessus peut être programmé par des moyens logiciels sur le calculateur. Ainsi, les moyens de test 20 comprennent un jeu d'instruction de programme exécutées par les moyens de commande.

## Revendications

1. Système de commande d'au moins un actionneur (6) de capots (2) d'un inverseur de poussée pour turboréacteur comprenant un ensemble de composants d'actionnement et de contrôle comportant au moins :
- un actionneur (6) de capot (2) entraîné par un moteur électrique (7), et
- des moyens de commande (9) de l'actionneur et du moteur électrique (7),
**caractérisé en ce que**
les moyens de commande (9) comprennent des moyens de test (20), comportant une interface (22) destinée à la réception de requêtes de test en provenance d'un utilisateur,
et **en ce que**
les moyens de test (20) sont agencés pour procéder à la réception d'une requête de test à un cycle de test d'un ou plusieurs composants (7, 6, 15, 18) du système comprenant un actionnement isolé du ou des composants (7, 6, 15, 18) par rapport aux autres composants du système.

2. Système selon la revendication 1, dans lequel l'interface (22) des moyens de test (20) est reliée par l'intermédiaire de moyens de communication (10) au système de commande de l'aéronef (12).

3. Système selon l'une des revendications précédentes, dans lequel les moyens de test (20) sont agencés pour réaliser de façon répétitive un cycle de test sur un composant du système (7, 6, 15, 18).

4. Système selon l'une des revendications précédentes, dans lequel les moyens de test (20) sont agencés pour que les actions commandées sur un composant (7, 6, 15) lors d'un cycle de test ramènent le composant dans son état initial à la fin du cycle de test.

5. Système selon l'une des revendications précédentes, dans lequel les moyens de test (20) sont agencés pour réaliser, lors d'un cycle de test, une commande sur un composant (7, 6, 15, 18) avec une valeur de puissance inférieure à celle utilisée en fonctionnement normal.

6. Système selon l'une des revendications précédentes, dans lequel les moyens de test (20) sont agencés pour que la commande d'un composant (7, 6, 15) soit réalisée par l'intermédiaire de la même partie des moyens de commande (9) lors d'un cycle de test et lors du fonctionnement normal.

7. Système selon l'une des revendications précédentes, comprenant un verrou de capot (18), dans lequel un cycle de test correspond à une ouverture puis à une fermeture du verrou (18).

8. Système selon l'une des revendications précédentes, comprenant un frein de moteur (15), dans lequel un cycle de test comprend une activation et une désactivation du frein de moteur (15).

9. Système selon l'une des revendications précédentes, dans lequel les moyens de test (20) comprennent un jeu d'instruction de programme exécutées par les moyens de commande (9).

10. Système selon l'une des revendications précédentes, comprenant au moins un capteur (16, 17, 18, 19) d'une grandeur représentative du fonctionnement d'un composant, dans lequel le résultat d'un cycle de test est obtenue par l'analyse du signal fourni par le capteur.

11. Procédé de test d'un système de commande d'au moins un actionneur de capots d'un inverseur de poussée pour turboréacteur selon l'une des revendications 1 à 10 comprenant les étapes consistant à :
- recevoir (E1) une requête pour réaliser le test d'un composant en provenance d'un utilisateur,
- réaliser (E2) une commande d'actionnement d'un ou de plusieurs composants d'un système de commande de l'inverseur de poussée de façon isolée par rapport aux autres composants du système.

12. Procédé de commande selon la revendication 11, dans lequel l'étape de commande (E2) d'une action est réalisée de façon répétitive.

13. Procédé de commande selon l'une des revendications 11 ou 12, dans lequel la commande de l'action sur un composant testé est réalisée avec une valeur de puissance inférieure à celle utilisée en fonctionnement normal.

## Patentansprüche

1. Steuersystem mindestens eines Aktuators (6) für Cowlings (2) einer Schubumkehr für ein Turbotriebwerk, das eine Gruppe von Betätigungs- und/oder Überwachungskomponenten umfasst, die mindestens aufweist:
- einen Aktuator (6) einer Cowling (2), der von mindestens einem Elektromotor (7) angetrieben wird, und
- Steuermittel (9) des Aktuators und des Elektromotors (7),
**dadurch gekennzeichnet, dass**
die Steuermittel (9) Testmittel (20) umfassen, die eine Schnittstelle (22) aufweisen, die zum Empfang von Testanfragen eines Benutzers bestimmt ist,
und dadurch, dass:
die Testmittel (20) ausgebildet sind, um eine Testanfrage zwecks eines Testzyklus einer oder mehrerer Komponenten (7, 6, 15, 18) des Systems zu empfangen, die eine isolierte Betätigung der Komponente(n) (7, 6, 15, 18) im Verhältnis zu den anderen Komponenten des Systems umfasst.

2. System nach Anspruch 1, wobei die Schnittstelle (22) der Testmittel (20) anhand von Kommunikationsmitteln (10) mit dem Steuersystem des Luftfahrzeugs (12) verbunden ist.

3. System nach einem der vorangehenden Ansprüche, wobei die Testmittel (20) ausgebildet sind, um einen Testzyklus einer Komponente (7, 6, 15, 18) des Systems wiederholt durchzuführen.

4. System nach einem der vorangehenden Ansprüche, wobei die Testmittel (20) derart ausgebildet sind, dass die Aktionen, die während eines Testzyklus eine Komponente (7, 6, 15) steuern, die Komponente am Ende des Testzyklus in ihren Ausgangszustand zurücksetzen.

5. System nach einem der vorangehenden Ansprüche, wobei die Testmittel (20) ausgebildet sind, um bei einem Testzyklus eine Komponente (7, 6, 15, 18) mit einem Leistungswert zu steuern, der kleiner ist als der, der im normalen Betrieb verwendet wird.

6. System nach einem der vorangehenden Ansprüche, wobei die Testmittel (20) derart ausgebildet sind, dass die Steuerung einer Komponente (7, 6, 15) bei einem Testzyklus und beim normalen Betrieb über denselben Abschnitt der Steuermittel (9) durchgeführt wird.

7. System nach einem der vorangehenden Ansprüche, das einen Cowlingriegel (18) umfasst, wobei ein Testzyklus einem Öffnen und danach einem Schließen des Riegels (18) entspricht.

8. System nach einem der vorangehenden Ansprüche, das eine Motorbremse (15) umfasst, wobei ein Testzyklus eine Aktivierung und eine Deaktivierung der Motorbremse (15) umfasst.

9. System nach einem der vorangehenden Ansprüche, wobei die Testmittel (20) einen Satz von Programmbefehlen umfassen, die von den Steuermitteln (9) ausgeführt werden.

10. System nach einem der vorangehenden Ansprüche, das mindestens einen Sensor (16, 17, 18, 19) einer repräsentativen Größe der Funktion einer Komponente umfasst, wobei das Ergebnis eines Testzyklus durch die Analyse des von dem Sensor gelieferten Signals erhalten wird.

11. Testverfahren eines Steuersystems mindestens eines Aktuators von Cowlings einer Schubumkehr für ein Turbotriebwerk nach einem der Ansprüche 1 und 10, das die Schritte umfasst, die darin bestehen:
- Empfangen (E1) einer Testanfrage zur Durchführung des Testes einer Komponenten von einem Benutzer,
- isoliertes Durchführen (E2) einer Betätigungssteuerung einer oder mehrerer Komponenten eines Steuersystems der Schubumkehr im Verhältnis zu den anderen Komponenten des Systems.

12. Steuerverfahren nach Anspruch 11, wobei der Steuerschritt (E2) einer Aktion wiederholt durchgeführt wird.

13. Steuerverfahren nach einem der Ansprüche 11 und 12, wobei die Steuerung der Aktion auf eine getestete Komponente mit einem Leistungswert durchgeführt wird, der kleiner ist als der, der im normalen Betrieb verwendet wird.

## Claims

1. A control system for at least one actuator (6) for cowls (2) of a turbojet engine thrust reverser, comprising a set of actuating and control components including at least:
- a cowl (2) actuator (6) driven by an electric motor (7), and
- control means (9) for the actuator and the electric motor (7),
**characterized in that**
the control means (9) comprise test means (20), including an interface (22) designed to receive test requests from the user,
and **in that**
the test means (20) are arranged to receive a test request during a test cycle for one or more components (7, 6, 15, 18) of the system comprising isolated actuation of the component(s) (7, 6, 15, 18) relative to the other components of the system.

2. The system according to claim 1, wherein the interface (22) of the test means (20) is connected by communication means (10) to the control system of the aircraft (12).

3. The system according to one of the preceding claims, wherein the test means (20) are arranged to repetitively perform a test cycle on a component of the system (7, 6, 15, 18).

4. The system according to one of the preceding claims, wherein the test means (20) are arranged so that the actions commanded on a component (7, 6, 15) during a test cycle return the component to its initial state at the end of the test cycle.

5. The system according to one of the preceding claims, wherein the test means (20) are arranged to perform, during a test cycle, a command on a component (7, 6, 15, 18) with a power value lower than that used during normal operation.

6. The system according to one of the preceding claims, wherein the test means (20) are arranged so that the command of a component (7, 6, 15) is done using the same part of the control means (9) during a test cycle and during normal operation.

7. The system according to one of the preceding claims, comprising a cowl latch (18), wherein a test cycle corresponds to an opening, then a closing of the latch (18).

8. The system according to one of the preceding claims, comprising an engine brake (15), wherein a test cycle comprises an activation and deactivation of the engine brake (15).

9. The system according to one of the preceding claims, wherein the test means (20) comprise a set of program instructions executed by the control means (9).

10. The system according to one of the preceding claims, comprising at least one sensor (16, 17, 18, 19) sensing a property that is representative of the operation of a component, in which the result of a test cycle is obtained by analyzing the signal provided by the sensor.

11. A test method for testing a control system of at least one cowl actuator of a turbojet engine thrust reverser according to one of claims 1 to 10, comprising the following steps:
- receiving (E1) a request from a user to test a component,
- carrying out (E2) a command to actuate one or more components of a control system of the thrust reverser in an isolated manner relative to the other components of the system.

12. The control method according to claim 11, wherein the step (E2) commanding an action is done repetitively.

13. The control method according to one of claims 11 or 12, wherein the command for the action on a test component is done with a power value lower than that used during normal operation.
